# EUROPEAN PATENT SPECIFICATION

(11) **EP 2 329 054 B1**
(45) Date of publication and mention of the grant of the patent: **11.12.2019**
(21) Application number: 09809126.7
(22) Date of filing: 28.08.2009
(51) Int. Cl.: C22C 33/00, C21C 5/00, C22C 38/00, C21B 3/00, C21C 7/00, F27B 1/00, C21B 11/00, C22B 4/06, F27B 3/00, C21B 13/00, C22C 35/00, F27D 11/00, C21C 1/00, C22C 37/00, C21C 5/52, C21C 5/54, C22B 5/10, F27B 3/10, F27B 3/18

(54) **PRODUCTION OF FERRO-ALLOYS**
HERSTELLUNG VON EISENLEGIERUNGEN
PRODUCTION DE FERRO-ALLIAGES

(30) Priority: 29.08.2008 AU 2008207575; 14.11.2008 AU 2008246209
(43) Date of publication of application: 08.06.2011
(73) Proprietor: NewSouth Innovations Pty Limited, Sydney, NSW 2052 (AU)
(72) Inventor: VIELHAUER, Paul Anthony, Rooty Hill New South Wales 2766 (AU); O'KANE, Paul James, Rooty Hill New South Wales 2766 (AU); DICKER, Jonathan David, Rooty Hill New South Wales 2766 (AU); SKIDMORE, Catherine Louise, Rooty Hill New South Wales 2766 (AU)
(74) Representative: DREISS Patentanwälte PartG mbB
(86) International application number: PCT/AU2009/001126
(87) International publication number: WO 2010/022473

(56) References cited:
- WO-A1-2006/024069
- WO-A1-2006/024069
- JP-A- 2002 241 830
- US-A- 5 322 544
- US-A- 5 322 544
- US-A1- 2002 112 567
- US-A1- 2002 112 567

## Description

The present invention relates to a method and an apparatus for producing ferro-alloys (such as steel) in an electric arc furnace or other suitable metallurgical furnace.

International Publication WO 2006/024069 in the name of New South Innovations Pty Ltd, hereinafter referred to as the "International Publication" discloses a method for producing a ferro-alloy in an electric arc furnace that is characterised by supplying an unagglomerated carbon-containing polymer that functions as a slag foaming agent to the furnace.

The International Publication defines the term "unagglomerated carbon-containing polymer" as covering "both fine and coarse granulated and particulate polymers and is intended to exclude such polymers as formed together with EAF waste dust or steel dust". The International Publication describes that such agglomerated solids comprising polymers and EAF waste dust or steel dust do not function as a slag foaming agent.

The International Publication describes that, typically, the unagglomerated carbon-containing polymer is charged into an electric arc furnace such that it at least partially combusts and produces a carbonaceous residue. The International Publication also describes that the carbonaceous residue then oxidises to cause slag foaming and may additionally function as a reducing agent or a recarburiser.

The International Publication describes that, typically, the carbon-containing polymer comprises the atoms C, H and optionally O only and that, whilst other elements may be present in the polymer (e.g. N, S, P, Si, halogens etc.) these other elements may interfere with ferro-alloy production and/or produce contaminants, pollutants, noxious gases etc. The International Publication describes that, by judiciously selecting the carbon-containing polymer, the formation of noxious gases and other detrimental or harmful products can be avoided. The International Publication describes that one suitable carbon-containing polymer is polyethylene but other plastics such as polypropelyene, polystyrene, polybutadiene styrene, APS etc. may also be used.

The above description of the disclosure in the International Publication is not to be taken as an admission that the International Publication is part of the common general knowledge in Australia or elsewhere.

The applicant has carried out trials on the method of producing ferro-alloys in the form of steel at the electric arc furnace facilities of the applicant in Melbourne and Sydney.

As a consequence, the applicant has identified parameters that are important to the successful use of unagglomerated carbon-containing polymers in the production of steel.

In addition, as a consequence of the trials, the applicant has developed a particular method of producing steel (and other ferro-alloys). The method includes the use of unagglomerated and agglomerated carbon-containing polymers.

Furthermore, as a consequence of the trials, the applicant has developed technology for successfully supplying unagglomerated and agglomerated carbon-containing polymers to an electric arc furnace, or other suitable metallurgical furnace, to carry out the above-mentioned method of producing steel in the furnace.

In particular, the technology developed by the applicant focuses on areas such as, but not limited to, (a) mixing of unagglomerated and agglomerated carbon-containing polymers and other materials, (b) supplying the mixture to a furnace including flowrate of material into the furnace, (c) materials handling of the mixture upstream of the furnace, and (d) temperature pick-up and overall heat control in the furnace.

The invention relates to a method for producing a ferro-alloy as defined in claims 1, 2. Advantageous embodiments are provided in the dependent claims.

According to an aspect of the present invention there is provided a method for producing a ferro-alloy, such as steel, in an electric arc furnace or other suitable metallurgical furnace that comprises supplying a mixture of (a) a carbon-containing polymer that is capable of acting as a slag foaming agent and (b) another source of carbon into the furnace during at least a part of a power-on phase of the method.

More specifically, the present invention provides a method for producing a ferro-alloy, such as steel, in an electric arc furnace or other suitable metallurgical furnace that comprises supplying a mixture of (a) a carbon-containing polymer that is capable of acting as a slag foaming agent and (b) another source of carbon into the furnace during at least a part of a first power-on phase of the method and supplying a further mixture of the carbon-containing polymer and another source of carbon into the electric arc furnace during a second power-on phase of the method.

More specifically, the present invention provides a method of producing a ferro-alloy in an electric arc furnace or other suitable metallurgical furnace which comprises:
(a) supplying an initial charge of a feedstock for the ferro-alloy to the furnace;
(b) operating in a first power-on phase and establishing an arc between an electrode or electrodes of the furnace and the solid feedstock charge and generating heat in the furnace and melting the solid feedstock charge;
(c) after a first period of time into the first power-on phase, commencing supply of a mixture of (i) a carbon-containing polymer that is capable of acting as a slag foaming agent and (ii) an another source of carbon into the furnace;
(d) at the end of the first power-on phase, supplying a further charge of the ferro-alloy feedstock to the furnace;
(e) operating in a second power-on phase by re-establishing the arc;
(f) after a first period of time into the second power-on phase, commencing injection of a mixture of (i) a carbon-containing polymer that is capable of acting as a slag foaming agent and (ii) an another source of carbon into the furnace; and
(g) at the end of the second power-on phase, tapping molten ferro-alloy from the furnace.

The method may include injecting the mixture of the carbon-containing polymer and the other source of carbon during non-power-on phases of the method.

The carbon-containing polymer may be an unagglomerated polymer described herein.

Typically, the unagglomerated carbon-containing polymer is as described in the International Publication.

The unagglomerated carbon-containing polymer may comprise any one or more of rubber (synthetic or natural) and other polymers such as polypropylene, polystyrene, polybutadiene styrene, and APS. Typically, the polymer has a secondary function as an energy source.

The carbon-containing polymer may be an agglomerated carbon-containing polymer. Examples of such agglomerates include agglomerates of carbon-containing polymers and any one or more of fluxes, iron oxides (such as mill scale), and bag house solids.

Typically, the further carbon source is as described in the International Publication and, by way of example, may act as a fuel and, in addition, may contribute to slag foaming, and act as a reducing agent or recarburizer.

The other source of carbon may comprise any one or more of coke, carbon char, charcoal and graphite.

A furnace operator may use any suitable parameter to assess the time to commence supply of the mixture of the carbon-containing polymer and the other carbon source during the power-on phase or phases.

By way of example, the operator may time the commencement of such supply based on any one or more of the power consumption of the furnace, the composition of the melt in the furnace, and the melt temperature.

The power-on time during the power-on phase or phases may also be used as an indicator of the times to commence supply of the carbon-containing source and the other carbon source.

The preferred ratio of the carbon-containing source and the other carbon source in the above-mentioned mixture of these materials may vary with particular furnaces.

The ratio of the carbon-containing source and the other carbon source in the above-mentioned mixture of these materials may be varied during the time period or periods of supply of the mixture to the furnace.

The flowrate of the mixture of the carbon-containing source and the other carbon source may be constant or may be varied during the time period or periods of supply of the mixture to the furnace.

There may be continuous or periodic supply of the mixture of the carbon-containing source and the other carbon source during the power-on phase or phases.

The carbon-containing polymer may comprise 20-60 wt.% of the total weight of the mixture.

More typically, the carbon-containing polymer comprises 20-50 wt.% of the total weight of the mixture.

Typically, the carbon-containing polymer comprises 20-40 wt.% of the total weight of the mixture.

Preferably the carbon-containing polymer comprises 25-35 wt.% of the total weight of the mixture.

The mixture of the carbon-containing source and the other carbon source supplied to the furnace during the first power-on phase may be the same as the mixture supplied during the second power-on phase.

Alternatively, the mixtures may be different in terms of the materials and/or the ratios of the materials.

Typically, the sizes and the densities of each of the components of the mixture of the carbon-containing source and the other carbon source are selected having regard to the materials handling requirements for mixing and transporting the mixture to the furnace. Components may be pre-mixed remotely from the furnace and stored as a mixture proximate the furnace and supplied via a pipeline to the furnace as required during the operation of the method. Alternatively, the components may be stored separately proximate the furnace and mixed as required and transported to the furnace. The materials handling considerations including forming the mixture as a homogeneous mixture, i.e. a mixture that has a substantially uniform density with minimum segregation of the components, and being able to transport the mixture to the furnace efficiently, i.e. by avoiding blockages in pipes.

Typically, the size of the carbon-containing source is selected to be less than 6 mm and preferably less than 4 mm.

Typically, the method comprises injecting an oxygen-containing gas, such as oxygen, into the furnace during the power-on phase or phases.

The method may include monitoring the slag profile, as described herein, during the course of the method and controlling injection of the mixture of the carbon-containing polymer and the other source of carbon having regard to the monitored slag profile.

The term "slag profile" is understood herein to mean characteristics, such as iron oxide levels, of the slag that provide an indication (directly or indirectly) of the operation of the method.

The slag profile may be monitored continuously or periodically.

The initial and the further charge of the feedstock may be solid charges. One or both charge may include at least some molten metal.

According to the present invention, there is also provided a metallurgical furnace such as an electric arc furnace that comprises a materials handling system for supplying a mixture of (i) a carbon-containing polymer that is capable of acting as a slag foaming agent and (ii) another source of carbon to the furnace during a method of producing a ferro-alloy in the furnace.

Typically, the materials handling system comprises separate hoppers for storing the carbon-containing polymer and the other carbon source, a pipeline for transporting the carbon-containing polymer and the other carbon source to the furnace, and control valves for controlling the flow of each of the carbon-containing polymer and the other carbon source into the supply line so that the mixture of these materials forms in the pipeline and is transported to and supplied to the furnace.

Typically, the materials handling system comprises **a** blower for entraining the mixture and transporting the mixture along the pipeline.

Typically, the materials handling system is arranged to supply the carbon-containing polymer to the pipeline upstream of the introduction point or points for the other carbon source.

The mixture of the carbon-containing polymer and the other carbon source may be supplied to the furnace by any suitable apparatus.

For example, the mixture may be injected into the furnace via a lance or lances extending into the furnace through an opening in a side or the roof of the furnace.

Other injection options include an intergrated burner/injector or intergrated burners/injectors extending through the side wall and/or the roof and consumable lances extending into the furnace.

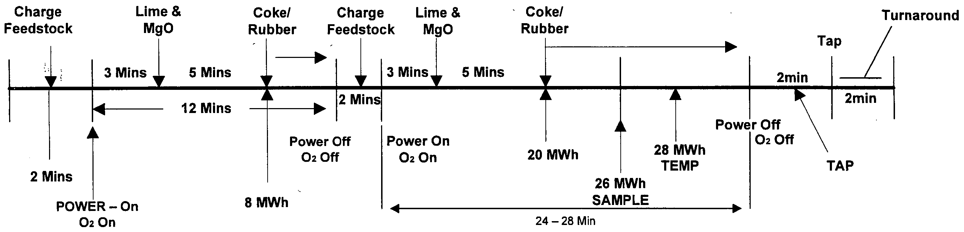

The present invention is described further by way of example with reference to the accompanying drawing which is a timeline for one embodiment of a method of producing steel in an electric arc furnace in accordance with the present invention.

The following description of the timeline shown in the figure was developed during the course of trials at the Sydney electric arc facilities of the applicant.

In general terms, the technology developed by the applicant as a consequence of the trials, including the flowsheet, focuses on areas such as, but not limited to, mixing of unagglomerated carbon-containing polymers, as described herein, and other materials, supplying the mixture to a furnace, materials handling of the mixture upstream of the furnace, and temperature pick-up and overall heat control in the furnace.

It can readily be appreciated that appropriate timelines for producing steel in other electric arc furnaces could readily be developed on a case-by-case basis.

With reference to the figure, a first solid feedstock for producing steel in the form of a scrap charge is supplied to the electric arc furnace in a two minute period of time.

After charging the furnace, power is supplied to the furnace electrodes and oxygen (or other suitable oxygen-containing gas) is injected into the furnace. Arcs are established between the electrodes and the solid feedstock, thereby generating heat that progressively melts the solid charge.

After approximately 3MWh of power had been supplied to the furnace, which is typically a period of time of three minutes into this first power-on phase, injection of fluxes in the form of lime and magnesia into the furnace commences. These materials are supplied to form a slag on molten material forming in the furnace. The figure of 3MWh equates to the power required for the electrodes to "bore down" through the scrap and to be arcing on the heavy melt in the bottom of the furnace.

After approximately 8MWh of power has been supplied to the furnace, which is typically a period of eight minutes into the first power-on phase, a mixture of an unagglomerated carbon-containing polymer in the form of rubber and another carbon source in the form of coke are injected into the furnace. The figure of 8MWh equates to when a flat bath of molten material and a liquid slag begin to form. The injection of the mixture continues at a constant flow rate for a period of four minutes to the end of the first power-on (and oxygen injection) phase. The mixture is injected via a lance extending into the furnace. The rubber/coke mixture acts as a fuel, with combustion of rubber/coke generating heat. The rubber/coke, including the combustion products, also act as a slag foaming agent, as described in the International Publication.

A second charge of the feedstock for producing steel in the form of a scrap charge is supplied to the furnace during a two minute period following the end of the first power-on phase.

After charging the second feedstock charge, power to the furnace and oxygen (or other suitable oxygen-containing gas) injection are re-established and the furnace commences operating a second power-on phase.

After approximately 3MWh of power has been supplied to the furnace following the second feedstock charge, which is typically three minutes of the second power-on phase, fluxes in the form of lime and magnesia are supplied to the furnace to contribute to maintaining a required level of slag in the furnace.

After approximately 20 MWh of power has been supplied to the furnace since the first feedstock charge, which is typically a further five minute period of time in the second power-on phase, the mixture of rubber and coke is again injected into the furnace via the lance and injection of the mixture continues at a constant flow rate until the end of the second power-on (and oxygen injection) phase. Typically, the second power-on (and oxygen injection) phase runs for 24-28 minutes.

After the second power-on phase ends, the furnace is tapped to discharge molten steel and slag from the furnace during a two minute period.

At the end of tapping, there is a two minute turnaround time before the method is repeated with a new charge of scrap is supplied to the furnace.

Based on the trials at the Sydney and the Melbourne electric arc furnace facilities of the applicant, results achieved to date indicate that the invention has the potential to:
(a) speed up the slag-foaming process;
(b) achieves a reduction in electricity consumption, meaning a fall in greenhouse gas emissions if produced by coal-fired power stations;
(c) reduces total cost of production by reducing the quantity of injectant material required;
(d) improve furnace productivity by a reduction in "tap-to-tap" time - a measure of the time taken to produce one batch of molten steel.

In addition, the use of unagglomerated carbon-containing polymers has significant potential can potentially be diverted away from land fills.

The above findings are significant outcomes.

Many modifications may be made to the embodiment of the method of the present invention described above without departing from the scope of the invention.

By way of example, whilst the embodiment is described in the context of producing steel, the present invention is not so limited and extends to the production of ferro-alloys generally.

## Claims

1. A method for producing a ferro-alloy, such as steel, in an electric arc furnace or other suitable metallurgical furnace that comprises supplying a mixture of (a) a carbon-containing polymer that is capable of acting as a slag foaming agent and (b) another source of carbon into the furnace during at least a part of a power-on phase of the method, and assessing the time to commence supply of the mixture of the carbon-containing polymer and the other carbon source during the power-on phase or phases based on any one or more of the power consumption of the furnace, the composition of the melt in the furnace, and the melt temperature.

2. A method for producing a ferro-alloy, such as steel, in an electric arc furnace or other suitable metallurgical furnace that comprises supplying a mixture of (a) a carbon-containing polymer that is capable of acting as a slag foaming agent and (b) another source of carbon into the furnace during at least a part of a first power-on phase of the method and further supplying a mixture of (a) a carbon-containing polymer that is capable of acting as a slag foaming agent and (b) another source of carbon into the electric arc furnace during a second power-on phase of the method, and assessing the time to commence supply of the mixture of the carbon-containing polymer and the other carbon source during the power-on phase or phases based on any one or more of the power consumption of the furnace, the composition of the melt in the furnace, and the melt temperature.

3. The method defined in claim 2 comprises:
(a) supplying an initial charge of a feedstock for the ferro-alloy to the furnace;
(b) operating in the first power-on phase and establishing an arc between an electrode or electrodes of the furnace and the solid feedstock charge and generating heat in the furnace and melting the solid feedstock charge;
(c) after a first period of time into the first power-on phase, commencing supply of a mixture of (i) a the carbon-containing polymer that is capable of acting as a slag foaming agent and (ii) the another source of carbon into the furnace;
(d) at the end of the first power-on phase, supplying a further charge of the ferro-alloy feedstock to the furnace;
(e) operating in the second power-on phase by re-establishing the arc;
(f) after a first period of time into the second power-on phase, commencing injection of the further mixture of (i) the carbon-containing polymer that is capable of acting as a slag foaming agent and (ii) the other source of carbon into the furnace; and
(g) at the end of the second power-on phase, tapping molten ferro-alloy from the furnace.

4. The method defined in any one of the preceding claims wherein the carbon-containing polymer comprises any one or more of rubber (synthetic or natural) and other polymers such as polypropylene, polystyrene, polybutadiene styrene, and APS.

5. The method defined in any one of the preceding claims wherein the other source of carbon comprises any one or more of coke, carbon char, charcoal and graphite.

6. The method defined in any one of the preceding claims comprises varying the ratio of the carbon-containing polymer and the other carbon source in the mixture of these materials during the time period or periods of supply of the mixture to the furnace.

7. The method defined in any one of the preceding claims comprises maintaining the flowrate of the mixture of the carbon-containing polymer and the other carbon source constant during the time period or periods of supply of the mixture to the furnace.

8. The method defined in any one of claims 1 to 6 comprises varying the flowrate of the mixture of the carbon-containing polymer and the other carbon source during the time period or periods of supply of the mixture to the furnace.

9. The method defined in any one of the preceding claims comprises maintaining a continuous supply of the mixture of the carbon-containing polymer and the other carbon source during the power-on phase or phases.

10. The method defined in any one of the preceding claims wherein the carbon-containing polymer comprises 20-60 wt.% of the total weight of the mixture.

11. The method defined in any one of the preceding claims wherein the carbon-containing polymer comprises 25-35 wt.% of the total weight of the mixture.

12. The method defined in any one of the preceding claims comprises injecting an oxygen-containing gas, such as oxygen, into the furnace during the power-on phase or phases.

## Patentansprüche

1. Verfahren zum Erzeugen einer Eisenlegierung wie etwa Stahl in einem Lichtbogenofen oder einem anderen geeigneten, metallurgischen Ofen, das Folgendes umfasst: Zuführen einer Mischung aus (a) einem kohlenstoffhaltigen Polymer, das als ein schlackenaufschäumendes Mittel wirken kann, und (b) einer weiteren Kohlenstoffquelle in den Ofen zumindest während eines Abschnitts einer Betriebsphase des Verfahrens und Schätzen der Zeit, um die Zufuhr der Mischung aus dem kohlenstoffhaltigen Polymer und der anderen Kohlenstoffquelle während der Betriebsphase oder der Betriebsphasen zu beginnen, auf der Grundlage des Leistungsverbrauchs des Ofens und/oder der Zusammensetzung der Schmelze im Ofen und/oder der Schmelztemperatur.

2. Verfahren zum Erzeugen einer Eisenlegierung wie etwa Stahl in einem Lichtbogenofen oder einem anderen geeigneten, metallurgischen Ofen, das Folgendes umfasst: Zuführen einer Mischung aus (a) einem kohlenstoffhaltigen Polymer, das als ein schlackenaufschäumendes Mittel wirken kann, und (b) einer weiteren Kohlenstoffquelle in den Ofen zumindest während eines Abschnitts einer ersten Betriebsphase des Verfahrens und ferner Zuführen einer Mischung aus (a) einem kohlenstoffhaltigen Polymer, das als ein schlackenaufschäumendes Mittel wirken kann, und (b) einer weiteren Kohlenstoffquelle in den Lichtbogenofen während einer zweiten Betriebsphase des Verfahrens und Schätzen der Zeit, um die Zufuhr der Mischung aus dem kohlenstoffhaltigen Polymer und der anderen Kohlenstoffquelle während der Betriebsphase oder der Betriebsphasen zu beginnen, auf der Grundlage des Leistungsverbrauchs des Ofens und/oder der Zusammensetzung der Schmelze im Ofen und/oder der Schmelztemperatur.

3. Verfahren nach Anspruch 2, das Folgendes umfasst:
(a) Zuführen einer Anfangscharge eines Einsatzstoffs für die Eisenlegierung in den Ofen;
(b) Arbeiten in der ersten Betriebsphase und Einrichten eines Bogens zwischen einer oder mehreren Elektroden des Ofens und der Charge des festen Einsatzstoffs und Erzeugen von Wärme im Ofen und Schmelzen der Charge des festen Einsatzstoffs;
(c) nach einem ersten Zeitraum in der ersten Betriebsphase Beginnen der Zufuhr einer Mischung aus (i) dem kohlenstoffhaltigen Polymer, das als ein schlackenaufschäumendes Mittel wirken kann, und (ii) der anderen Kohlenstoffquelle in den Ofen;
(d) am Ende der ersten Betriebsphase Zuführen einer weiteren Charge des Eisenlegierungseinsatzstoffs in den Ofen;
(e) Arbeiten in der zweiten Betriebsphase durch erneutes Einrichten des Bogens;
(f) nach einem ersten Zeitraum in der zweiten Betriebsphase Beginnen des Einspeisens der weiteren Mischung aus (i) dem kohlenstoffhaltigen Polymer, das als ein schlackenaufschäumendes Mittel wirken kann, und (ii) der anderen Kohlenstoffquelle in den Ofen; und
(g) am Ende der zweiten Betriebsphase Abzapfen einer geschmolzenen Eisenlegierung aus dem Ofen.

4. Verfahren nach einem der vorhergehenden Ansprüche, wobei das kohlenstoffhaltige Polymer Gummi (synthetisch oder natürlich) und/oder andere Polymere wie etwa Polypropylen, Polystryrol, Polybutadien-Styrol und APS umfasst.

5. Verfahren nach einem der vorhergehenden Ansprüche, wobei die andere Kohlenstoffquelle Koks und/oder Holzkohle und/oder Aktivkohle und/oder Graphit umfasst.

6. Verfahren nach einem der vorhergehenden Ansprüche, das Folgendes umfasst: Verändern des Verhältnisses des kohlenstoffhaltigen Polymers und der anderen Kohlenstoffquelle in der Mischung aus diesen Materialien während des Zeitraums oder der Zeiträume der Zufuhr der Mischung in den Ofen.

7. Verfahren nach einem der vorhergehenden Ansprüche, das Folgendes umfasst: konstantes Aufrechterhalten der Durchflussmenge der Mischung aus dem kohlenstoffhaltigen Polymer und der anderen Kohlenstoffquelle während des Zeitraums oder der Zeiträume der Zufuhr der Mischung in den Ofen.

8. Verfahren nach einem der Ansprüche 1 bis 6, das Folgendes umfasst: Verändern der Durchflussmenge der Mischung aus dem kohlenstoffhaltigen Polymer und der anderen Kohlenstoffquelle während des Zeitraums oder der Zeiträume der Zufuhr der Mischung in den Ofen.

9. Verfahren nach einem der vorhergehenden Ansprüche, das Folgendes umfasst: Aufrechterhalten einer ununterbrochenen Zufuhr der Mischung aus dem kohlenstoffhaltigen Polymer und der anderen Kohlenstoffquelle während der Betriebsphase oder der Betriebsphasen.

10. Verfahren nach einem der vorhergehenden Ansprüche, wobei das kohlenstoffhaltige Polymer 20-60 Gew.-% des Gesamtgewichts der Mischung enthält.

11. Verfahren nach einem der vorhergehenden Ansprüche, wobei das kohlenstoffhaltige Polymer 25-35 Gew.-% des Gesamtgewichts der Mischung enthält.

12. Verfahren nach einem der vorhergehenden Ansprüche, das Folgendes umfasst: Einspeisen eines sauerstoffhaltigen Gases wie etwa Sauerstoff in den Ofen während der Betriebsphase oder der Betriebsphasen.

## Revendications

1. Procédé de production d'un ferro-alliage, tel que l'acier, dans un four à arc électrique ou dans un autre four métallurgique approprié qui comprend la fourniture d'un mélange (a) d'un polymère contenant du carbone qui peut faire office d'agent de moussage de laitier et (b) d'une autre source de carbone dans le four pendant au moins une partie d'une phase de mise en service du procédé, et d'évaluation du moment auquel commencer la fourniture du mélange du polymère contenant du carbone et de l'autre source de carbone pendant la ou les phase(s) de mise en service en se basant sur l'une quelconque ou plusieurs quelconques de la consommation énergétique du four, la composition de la coulée dans le four, et la température de la coulée.

2. Procédé de production d'un ferro-alliage, tel que l'acier, dans un four à arc électrique ou dans un autre four métallurgique approprié qui comprend la fourniture d'un mélange (a) d'un polymère contenant du carbone qui peut faire office d'agent de moussage de laitier et (b) d'une autre source de carbone dans le four pendant au moins une partie d'une première phase de mise en service du procédé, et en outre de fourniture d'un mélange (a) d'un polymère contenant du carbone qui peut faire office d'agent de moussage de laitier et (b) d'une autre source de carbone dans le four à arc électrique pendant au moins une deuxième phase de mise en service du procédé, et d'évaluation du moment auquel commencer la fourniture du mélange du polymère contenant du carbone et de l'autre source de carbone pendant la ou les phase(s) de mise en service en se basant sur l'une quelconque ou plusieurs quelconques de la consommation énergétique du four, la composition de la coulée dans le four, et la température de la coulée.

3. Procédé selon la revendication 2, comprenant:
(a) la fourniture d'une charge initiale d'une charge d'alimentation pour le ferro-alliage, dans le four;
(b) l'activation de la première phase de mise en service et l'établissement d'un arc entre une électrode ou des électrodes du four et la charge d'alimentation solide, et la génération de chaleur dans le four et la fusion de la charge d'alimentation solide;
(c) après un premier laps de temps au cours de la première phase de mise en service, le début de la fourniture d'un mélange de (i) un polymère contenant du carbone qui peut faire office d'agent de moussage de laitier et (ii) d'une autre source de carbone dans le four;
(d) à la fin de la première phase de mise en service, la fourniture d'une autre charge de la charge d'alimentation de ferro-alliage dans le four;
(e) l'activation de la deuxième phase de mise en service en ré-établissant l'arc;
(f) après un premier laps de temps au cours de la deuxième phase de mise en service, commencement de l'injection de l'autre mélange de (i) d'un polymère contenant du carbone qui peut faire office d'agent de moussage de laitier et (ii) de l'autre source de carbone dans le four; et
(g) à la fin de la deuxième phase de mise en service, soutirage du ferro-alliage fondu du four.

4. Procédé selon l'une quelconque des revendications précédentes, dans lequel le polymère contenant du carbone comprend l'un quelconque ou plusieurs quelconques d'un caoutchouc (synthétique ou naturel) et d'autres polymères tels que du polypropylène, du polystyrène, du polybutadiène styrène, et de l'APS.

5. Procédé selon l'une quelconque des revendications précédentes, dans lequel l'autre source de carbone comprend l'un quelconque ou plusieurs quelconques des coke, produit de carbonisation, charbon de bois et graphite.

6. Procédé selon l'une quelconque des revendications précédentes, comprenant la variation du rapport du polymère contenant du carbone et de l'autre source de carbone dans le mélange de ces matériaux pendant le ou les laps de temps de la fourniture du mélange dans le four.

7. Procédé selon l'une quelconque des revendications précédentes, comprenant le maintien constant du débit du mélange du polymère contenant du carbone et de l'autre source de carbone pendant le ou les laps de temps de la fourniture du mélange dans le four.

8. Procédé selon l'une quelconque des revendications 1 à 6, comprenant la variation du débit du mélange de polymère contenant du carbone et de l'autre source de carbone pendant le ou les laps de temps de la fourniture du mélange dans le four.

9. Procédé selon l'une quelconque des revendications précédentes, comprenant le maintien d'une fourniture continue du mélange du polymère contenant du carbone et de l'autre source de carbone pendant la ou les phase(s) de mise en service.

10. Procédé selon l'une quelconque des revendications précédentes, dans lequel le polymère contenant du carbone comprend de 20 à 60 % en poids du poids total du mélange.

11. Procédé selon l'une quelconque des revendications précédentes, dans lequel le polymère contenant du carbone comprend de 25 à 35 % en poids du poids total du mélange.

12. Procédé selon l'une quelconque des revendications précédentes, comprenant l'injection d'un gaz contenant de l'oxygène, tel que de l'oxygène, dans le four, au cours de la ou des phase(s) de mise en service.
